# EUROPEAN PATENT APPLICATION

(11) **EP 0 817 002 A2**
(43) Date of publication of application: **07.01.1998**
(21) Application number: 97110757.8
(22) Date of filing: 01.07.1997
(51) Int. Cl.: G06F 3/16

(54) **Speech supported navigation of a pointer in a graphical user interface**

(30) Priority: 01.07.1996 EP 96110599
(71) Applicant: International Business Machines Corporation, Armonk, N.Y. 10504 (US)
(72) Inventor: Schottmüller, Claus, 76227 Karlsruhe (DE); Schwab, Viktor, 76229 Karlsruhe (DE)
(74) Representative: Teufel, Fritz, Dipl.-Phys.

(57) **Abstract**

Disclosed is a method and a tool for speech controlled navigation of a pointer in a graphical user interface. Known approaches use speech commands like the arrow keys of a keyboard and are little user friendly. The invention therefore provides a space of discrete position states (quantization) for the pointer which can be only navigated via those discrete positions by means of speech command input. The granularity of the discrete position states can be adapted to the respective application window and the position states can be represented by a system of coordinates where the speech command input is based on absolute or relative coordinates. Advantageously a copy image of the graphical user interface of operation can be provided in front of or besides the actual user interface and a proxy pointer device is displayed on the copy image. Hereby only the copy image comprises the discrete position states, and the speech input commands are only transferred to the copy image. Navigation of the pointer device within the copy is permanently transferred and converted into respective commands on in the actual user interface. Hereby an operation event effected by the proxy pointer is effecting a respective event at the user interface.

## Description

This invention concerns navigation of a pointer device, like a mouse pointer or a pointer tablet, in a graphical user interface of an application program by speech controlled input commands. In particular the invention is directed to a method and a device for a speech controlled navigation of such a pointer.

The increasing demand for simplicity of operation of a computer has substantially determined the development of graphical user interfaces (GUIs) for the operation of application programs in a computer operating system or the operating systems themselves. A further improvement of operability has been accomplished by the development of powerful speech recognition systems which support technological unskilled or physically handicapped users for operation of a computer. Hereby the necessary control commands are recognized by such a recognition device and converted into the respective control commands. There are a number of speech recognition systems available, like the VOICE TYPE DICTATION SYSTEM (VTD) by IBM. This product has been subject matter of a number of patents, for instance US Patent 4,718,094 entitled "Speech Recognition System" assigned to the present assignee, which is referred to for the more detailed aspects of speech recognition. VTD consists of speaker dependent and speaker independent software modules and particulary provides a macro editor. The main program is a speech recognition engine which can serve only one application program at a given time. The actual active application window is marked by VTD my means of a coloured frame. From a window called "speech control" the user can gather all commands which are currently available.

A first particular feature of VTD is a programming interface (API) which allows pre-developed application programs to interact with the speech recognition engine of VTD and thus enables integration of speech input almost in the face of development of the new application program. A second feature of VTD is the above mentioned macro editor which enables the user especially to create own macros which allow execution of a number of actions (commands) by uttering only one macronym.

By use of VTD uttered words can be interpreted and executed as commands (so-called "Command mode"), or be recognized as words of a text document (so-called "dictation mode"). Dependent on the underlying computer hardware, the dictation system can perform the recognition process nearly in real time, i.e. the recognized words are displayed on the screen only with a short delay.

A typical range of application for speech recognition systems are the acoustic input of text documents on the one side, and on the other side the speech supported control of application programs of a computer system. A particular requirement of speech controlled operation of an application program is the capability of unrestricted positioning of a pointer in its viewport presented on the GUI. In case of acoustic input of text documents there exist specific dictation applications which either store the input text as a file or transfer the input data via a intermediate buffer storage of the graphical user interface in another application like a word processing system, in order to post-process the respective file.

For speech controlled processing of an application, in general, so-called macro interfaces are provided which enable adaptation of existing application programs to the respective speech recognition device without requiring amendments of the application programs themselves. By means of the prementioned macro interface, for instance, the program commands or the respective program menu items of the application program are associated with word sequences spoken by the user. For operation of a window system of an application program, e.g. for opening of a program file or starting of a standard editor, generally macros are pre-defined.

However, for adaptation of existing application programs to speech controlled operation by means of the above cited macro interface, several restrictions are imposed. The best use of such an interface is operation of program commands or/and program menu items by association of word sequences. Thereupon operation of the common window commands like "minimize", "maximize" and "close" is practicable, and is supported by predefined macros of speech recognition systems.

A troublesome undertaking is still the substitution of a pointer based program operation by speech input commands. This is particularly valid for positioning of a pointer to a certain point of an application window like by a movement of a mouse pointer. This kind of operation is a necessary requirement for an operation of a number of application programs like, for instance, graphical editors, annotation tools, and table calculation programs.

A known solution for the above problem are application programs which provide positioning of a mouse pointer via arrow keys of a keyboard. By assigning speech commands to those arrow keys, the mouse pointer is moved. That known approach is rather restrictive in that user friendliness and velocity of this kind of program operation is little satisfying.

Another known approach is the combined use of speech input and mouse navigation for operation of an application program. That approach, of course, is for users who are not familiar with mouse operations, but it is not applicable for handicapped users in so far, as for those users speech input is the only method of information input to a computer system.

Therefore, the problem underlying the present invention is to provide a navigation method and device for a pointer in a graphical user interface which is controlled only by speech command input.

This problem is solved by the features of method claim 1 and the features of device claim 7. The underlying concept of the present invention is to provide a space of discrete position states (quantization) for the pointer device. The pointer device can be only navigated via those discrete positions by means of speech command input. In particular, navigation of the pointer is independent of the respective application program.

According to a first embodiment of the invention, the granularity of the discrete position states can be adapted to the respective application window. In a further embodiment the position states are represented by a system of coordinates where the speech command input is based on absolute or relative coordinates.

In a preferred embodiment of the invention a copy image of the graphical user interface of operation is provided in front of or besides the actual user interface and a proxy pointer device is displayed on the copy image. Hereby only the copy image comprises the discrete position states, and the speech input commands are only transferred to the copy image. Navigation of the pointer device within the copy is transferred and converted into respective commands on in the actual user interface. Hereby an operation event effected by the proxy pointer is effecting a respective operation at the actual user interface.

In the following, the present invention is illustrated, with regard to the accompanying drawings, in more detail by way of preferred embodiments of a pointer navigation tool.
- Fig. 1: is an overview diagram illustrating conceptual structures of speech controlled pointer navigation according to the invention;
- Fig. 2: shows a first embodiment of the invention where the copy of a respective application window is presented besides the application window;
- Fig. 3a-f: depict different embodiments of speech controlled navigation of a pointer on a coordinate grid;
- Fig. 4: is a flow chart depicting the functionality of the proposed navigation tool; and
- Fig. 5: shows a second embodiment of the invention according to Fig. 1 where the copy of an application window is presented in front of the application window.

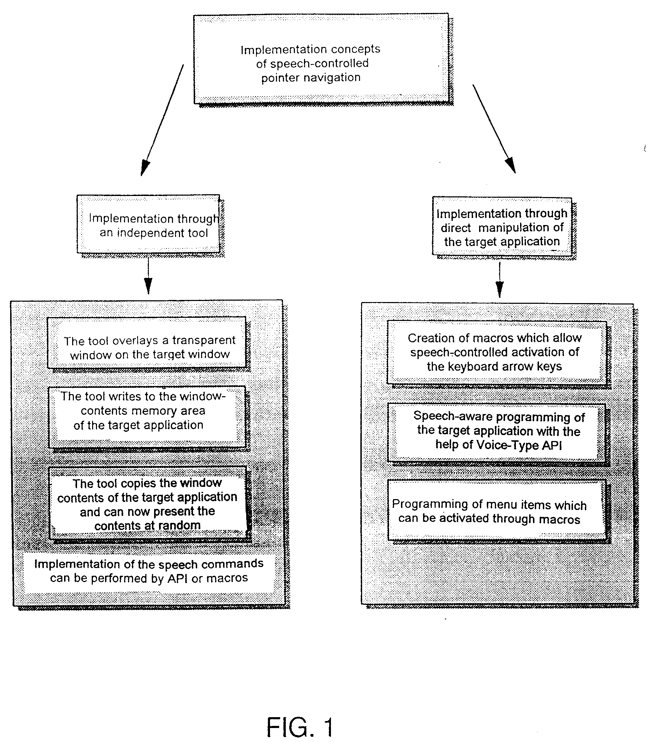

Two realization concepts of the invention are shown in Fig. 1. Lefthand an independent speech navigation tool, and
righthand a way of direct manipulation of the viewport of a destination application are presented.

A first way of direct programming of a destinated application is generation of speech commands via macros which activate the arrow keys on a computer keyboard. For that purpose the only restriction is that the destination application has to support pointer navigation via arrow keys. The advantage of that implementation is that no VTD-API calls are required. The respective macros for operation of the arrow keys have to be created only once and can be applied to other applications which also support arrow keys.

A second way is to implement the desired speech functionality at the development stage of an application by help of the VTD-API. Hereby each implementation of the new application requires a new programming effort. Thereupon the source code of the application has to be available.

A further way is a combination of macro programming and adapted programming of the destination application. For all speech commands menue items or buttons are created.

For the second concept concerning an independent speech controlled navigation tool, the following implementations are providable.

In a first embodiment of the navigation tool, the navigation tool draws the navigation help utilities like the coordinate grid directly into the viewport of the destination application. The mouse pointer will be directly controlled or viewed transparently. In case of non-employment of the mouse pointer, it is suitable to generate a new pointer which is used only during speech navigation.

In a second embodiment, the navigation tool is overlayed onto the destination application as a transparent window which comprises all graphic elements for navigation support. As in the beforehand embodiment the mouse pointer or a new pointer specific to the application can be utilized.

In a third embodiment, the navigation tool creates a copy of the window contents of the destination application and is therewith enabled to present the window in arbitrary size at an arbitrary position. Within that window a new pointer specific to the application can be provided. That pointer can be moved in real time synchronously with the respective navigation commands or it is viewed at a selected position after the selection has been fulfilled.

It is noted that the beforehand embodiments and implementations of the invention are only illustrative in so far as the skilled person can find other embodiments which make use of the above concepts.

The implementation of a independent tool has several advantages vis-a-vis the aforementioned application specific solution. The navigation tool has to be developed only once and can be applied to any application program. Therefore it can be used as a self-reliant alternative solution besides common mouse navigation. But the VTD-API is absolutely necessary.

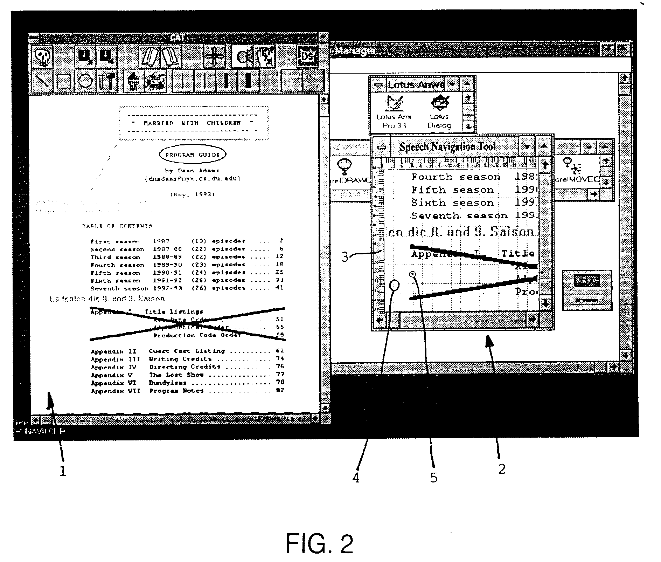

Fig. 2 shows a typical screen situation for a pointer navigation tool according to the present invention. On the left side of the screen the current page 1 of an application program is shown, where a mouse operation is envisaged. On the right side of the screen a smaller window 2 is shown which represents the proposed speech navigating tool. This navigation tool enables the user to navigate the mouse position in the application program on the left side via speech controlled command inputs which can be fulfilled quickly and user friendly. This navigation tool comprises a coordinate system 3 wherein the mouse pointer can be navigated on intersecting points 4 of that system. The coordinate system is represented by a rectangular coordinate grid. The coordinate grid comprises scales at the x-axes and the y-axes. Navigation of the mouse pointer 5 shown in the left lower part of the speech navigation tool window is accomplished by means of navigation commands defining relative or absolute coordinates wherein this navigation commands are input by speech, for instance by means of a microphone and a speech recognition system executed in the background of the shown application. In this embodiment the window of the speech navigation tool is presented besides the window of the respective application program. The window of the speech navigation tool shows a part of the page of the application program or the full page. This can be controlled by common window operations.

Navigation of the pointer device by use of the proposed speech navigation tool is converted into a movement of a pointer device within the application program window. The granularity of the coordinate grid shown within the speech navigation tool can be adapted to the respective and envisaged operations of the mouse pointer. It is also possible to discard the presentation of the coordinate grid. All the amendments of the presentation of the speech navigation tool can be accomplished by speech input.

In a conventional scenario of application without speech input a user calls up an application program by a double click of the mouse pointer on a respective icon depicted on the screen of the GUI. Having called up the program the user commonly moves the application program window or changes the size of the window. Then he moves the pointer to an item in a menue bar and selects a menue item by a further double click. If the user wants to load a file, he has to select the respective file name within a presented window and to confirm the selection by clicking on an "OK" button. After having load the file it is further assumed that he wants to place a rectangle into the picture of the file. For this he selects the respective icon and places the pointer (cursor) at the desired location within the window. The rectangle can be enlarged during pressed down mouse button and when the desired size and position are obtained the mouse button is released.

The above procedure includes different kinds of actions. These actions fulfilled by the user either by use of a pointer (e.g. computer mouse) or by use of a keyboard as input device can be divided into the following five classes of action with respect to speech control:
1. Actions with respect to the appearance of an application window;
2. inputs of alphanumeric symbols by a keyboard;
3. calling up an action or application program;
4. reactions to dialog windows; and
5. navigation of a pointer within a viewport of an application.

Although for these actions use of a keyboard or a mouse is very similar, the respective speech commands strongly differ from each other. Actions (commands) concerning manipulation of windows and applications (class 1), e.g. using scroll bars or moving windows, are already supported by the VOICE TYPE SYSTEM (VTD). But the respective functionality of VTD is not user friendly and requires a time consuming training phase to gain a performance comparable with mouse control. Thus that existing functionality is only of interest for users who need alternative solutions like handicapped people.

A so far unsolved problem is positioning of a pointer device within e.g. the viewport of an application program or within a GUI of an operating system like the presentation manager of IBM OS/2. In particular the user has an interest in selecting any point within an application window which may not be defined by the application program or the operating system.

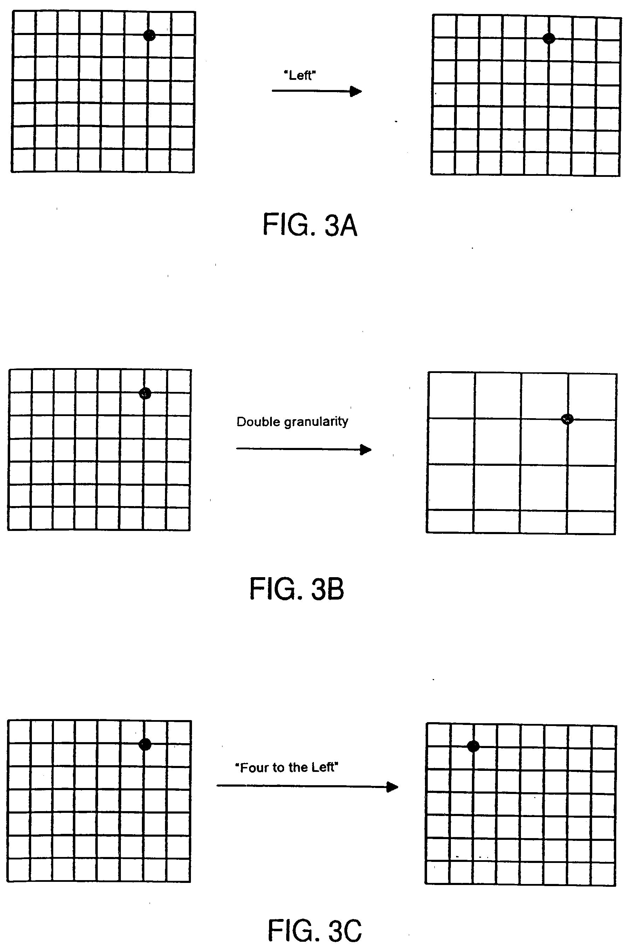

Different methods to navigate a pointer in a destination window comprising a grid quantization only by speech commands are depicted in Figures 3a-f. A first method to position a pointer (cursor) is per directional commands, e.g. a fixed length up, - down, or - lefthand (Fig. 3a). The fixed lenght has to be fine enough in order to provide a resolution which is required to move the cursor accurately enough. For example, within an editor window for input of text the minimum length is one cursor position. In contrast to that in a graphics application program the minimum length is about 0.5-2mm.

If the directional commands are combined with a preposition "towards" then the pointer is positioned at the border of the viewport with respect to the uttered direction. Further commands like "upwards" or "downwards" are provided which let the pointer move continuously. The pointer migrates with constant speed in the desired direction as long as a command "stop" is spoken.

In case of graphical application programs a grid representing quantization of the permissible space of the pointer is preferred to view the minimum length. In case of word processors like the Editor in VTD the minimum length can be represented by a symbol.

In order to improve motion speed of the cursor, in the embodiment according to Fig. 3b the granularity of the grid can be adapted by the user with respect to the envisaged motion length. The grid distance of that virtual grid is scalable and can be adjusted by speech commands like "minimum length x" or "double granularity". A simple directional command causes migration of the pointer according to the minimum length in the desired direction.

A further embodiment which improves motion speed, but with a constant granularity of the grid, is shown in Fig. 3c where a higher speed is obtained by particular commands like "x steps right", i.e. multiple successive steps are covered by only one command.

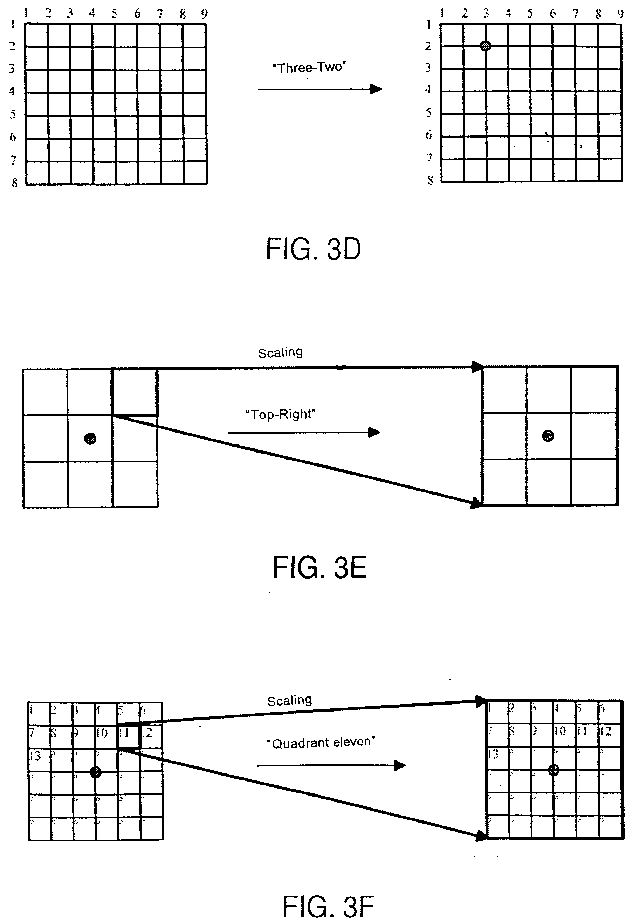

The beforehand discussed embodiments are related to motion based on relative coordinates wherein the following embodiment illustrated in Fig. 3d is based on absolute coordinates. Hereby a coordinate system (grid) is overlayed above the viewport of the application and the current position of the pointer is viewed by its respective x,y coordinates. As in the above approaches the minimum length of the grid is a sensitive quantity which especially depends on the respective application. This method allows a constant speed for positioning the pointer which particulary depends on the ability of the user to fastly assign coordinates to the respective grid points. Therefore it is advantageous to select a minimum length large enough to accomplish that without great effort.

In Fig. 3e a further embodiment is shown where the viewport is subdivided into sections, e.g. quadrants, each of them of identical size. In contrast to the above embodiments, the destination point are not grid intersection points but the respective centers of the sections. The destinated cursor position is hereby obtained by a number of successive steps wherein a selected sector is presented by the same number of sections, thus enabling motion to the desired position like known "zoom" operations. A particular advantage of that embodiment is that the user can position the pointer with arbitrary precision without need of any adjustments.

As in Fig. 3d, the foregoing embodiment can be also used by means of absolute coordinates. This is shown in Fig. 3f where quadrant "11" is selected for zooming. With absolute coordinates a position change does not depend on the current position of the pointer. This embodiment is preferred in case of a large distance between the current and the destinated position of the pointer since the user has not to estimate that distance.

It is emphasized that the invention can be also performed in combination with the other known techniques of pointer navigation, particulary use of pen-based computing, touch screen, laser pointer or dataglove. Above all the combination of speech and touch screen is of particular interest in the arena of kiosk information systems.

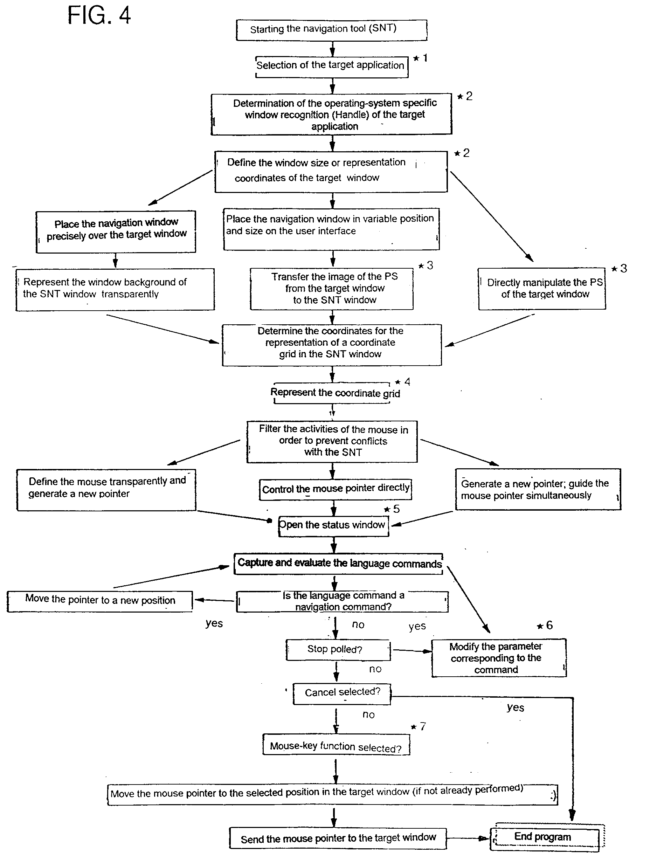

The functional features of the proposed speech navigation tool are now discussed in more detail with reference to Fig. 4. Having started the navigation tool, the first necessary step is selection of the target window in order to identify the respective window which can be accomplished by the following three operational steps:
- selection can be accomplished by a physical input medium like a mouse or a touch screen;
   the target window can be selected (*1) by help of a speech command where the name of the respective window is entered into the system assuming that such a name has been defined or the window before;
- selection by help of a recursive calling-up the speech navigation tool. Hereby the target window is represented by the entire screen. The user has to position per speech input a pointer onto the target application and elects that application by a speech activated mouse click. After this the application program returns back from the recursive loop and works now within the target window section.

Determination of the identification of the respective target application which is specific for the respective operating systems and for determining the dimensions and the presentation coordinates of the target windows, is accomplished by a respective application program interface call which is specific for the respective operating system. In order to transfer a copy of the presentation space from the target window to the speech navigation tool window and in order to manipulate the presentation space of the target windows directly, that presentation space under OS/2 is defined by a storage area which contains the window contents of an application which is presented on this screen service.

With regard to the presented coordinate grid, it's presentation can be modified by a pre-adjusted values of color, line width for graduation of the coordinate grid. The speech navigation tool provides the status window which for instance depicts the actual position of the pointer as X, Y-coordinate values, and maybe additionally the pre-adjusted parameters of the navigation tool. If those parameters are not shown in the status window, a new window has to be opened at this position where the possible modification is presented. Conceivable parameters (*6) are (with exception of the parameters cited above) are:
- a magnification factor for the target window contents;
- positioning of the window of the navigation tool automatically for instance as a full screen presentation, a presentation in front of the target window or a presentation besides the target window;
- recursive call up - of the speech navigation tool in order to place the speech navigation tool window at a new position on the service of the user interface;
- switching on/off a coordinate system;
- switching on/off a coordinate grid;
- election of respective navigation method.

An exemplary implementation of the invention as a software program is described with regard to the following program scheme which is presented as pseudo code.

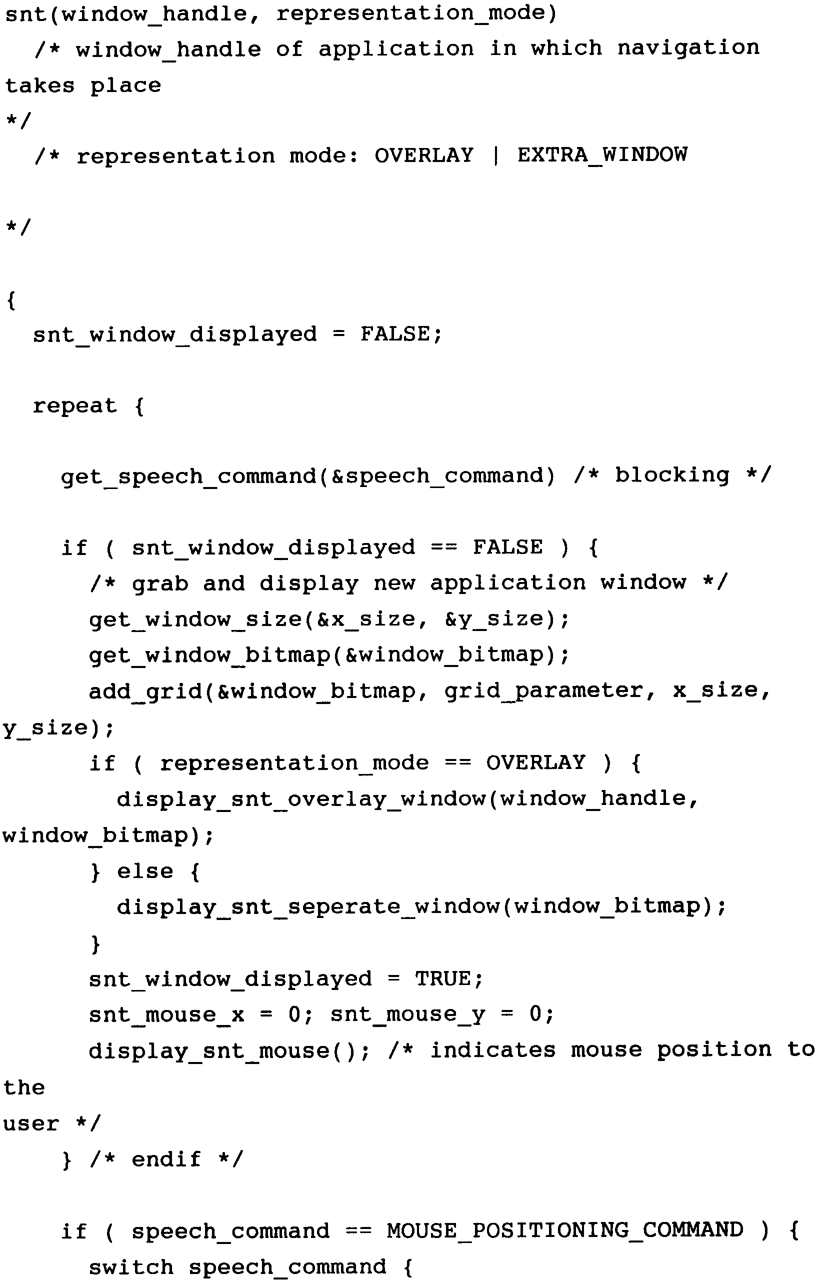

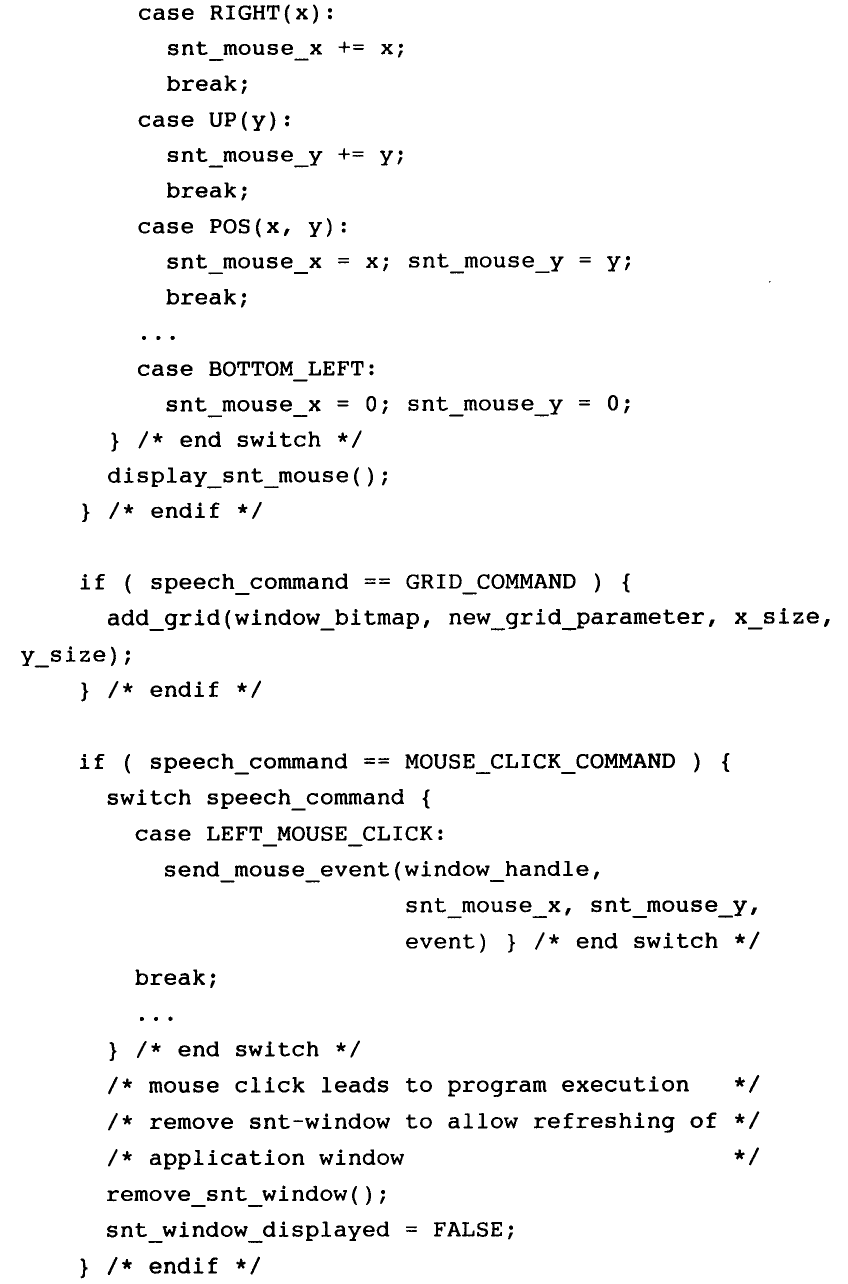

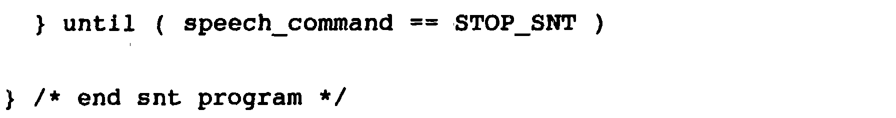

Through that routine a coordinate grid is overlayed on an application window and a respective quantization of the permissible area for the pointer provided. The pointer can be moved according to the pre-cited commands according to Fig. 3a-f.

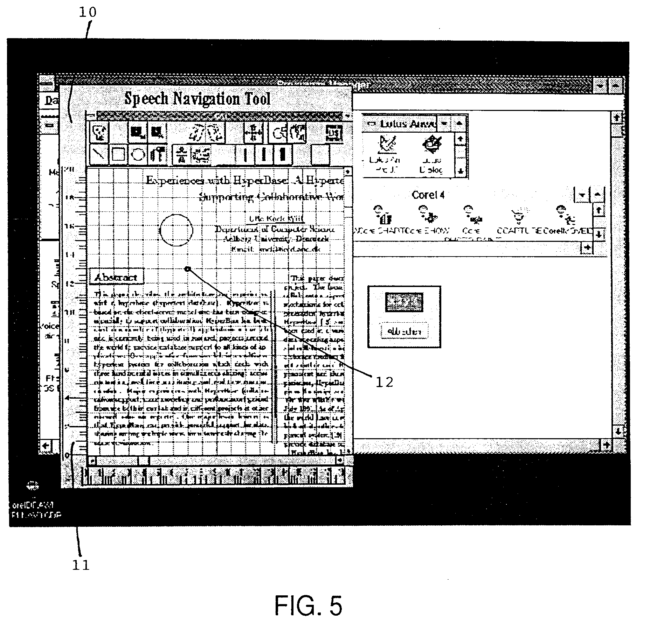

A preferred embodiment of the invention is shown in Fig. 5. In this embodiment the speech navigation tool window 10 covers the application window (not seen) completely. Therefore this second approach suggests the user the entire integration of the speech navigation tool into the application program. The user navigates the mouse pointer by speech commands, based on the presented coordinate grid 11. The resulting navigation of the pointer is continuously indicated by a movement of the pointer symbol 12 on the coordinate grid of the navigation tool. In case of presenting the output window of the speech navigation tool besides the Output window of the application program, navigation of the mouse pointer within the navigation tool effects the same movement of the mouse pointer in the application program window.

The speech navigation tool supports the following navigation methods:
- entering in absolute coordinates, e.g. '15,7' where the first number designates the X-coordinate and the second number the Y-coordinate;
- entering coordinate values which are relative to the actual input position of the mouse pointer, e.g. '3 up, 7 down';
- entering specific points of the grid like 'center', 'right edge', or 'left below'.

After positioning of the mouse pointer, the operation of the mouse keys is accomplished by speech input where the following operation steps are supported:
- single or double click by reference of the respective mouse key, e.g. 'left click, right click';
- a key stroke of the mouse key, e.g. 'left pressed, right release';
- simultaneously striking the left and the right mouse key, e.g. 'left-right click'.

Mouse operations which are controlled by speech input via the speech navigation tool cause respective mouse operation events at the underlying application program and have the same effect as the physical operation of a mouse at the actual input position of the mouse pointer on the application window. The result of operation of the application program is eligibly visible as a new copy of the application window within the speech navigation tool window. When the functionality of the navigation tool is not needed any longer, the speech navigation tool is finished by means of respective speech input commands.

With respect to the specific requirements of the application program which is to be operated, a number of parameters of the speech navigation tool can be specified by means of speech input. For instance, the granularity of the coordinate grid can be adjusted in order to optimize the accuracy of aim for positioning of the mouse pointer within the application program window. The following parameters can be modified also during runtime of the speech navigation tool:
- labels of the coordinate scales;
- granularity of the coordinate grid;
- presentation or none-presentation of the coordinate grid;
- the color or the gray scale of the coordinate grid;
- the respective piece cut out of the application program window;
- the magnification factor of the presented piece cut out of the application program window.

As known from the art of speech recognition, it is generally possible for the speech navigation tool to adjust the assignment of the controlled commands to the spoken word sequences user specifically.

## Claims

1. Method for speech supported navigation of a pointer in a graphical user interface, characterized by the steps of:
providing discrete position states for the pointer within the user interface;
navigating the pointer by speech commands with respect to said position states.

2. Method according to claim 1, characterized in that the granularity of said position states being scalable.

3. Method according to claim 1 or 2, characterized in that said position states are represented by a system of coordinates where navigating the pointer by speech commands based on absolute or relative coordinates.

4. Method according to claim 3, characterized in that said position states are represented by a coordinate grid where navigating the pointer by speech commands on distinct grid positions.

5. Method according to claim 4, characterized by displaying a copy of the graphical user interface which provides a visible coordinate grid indicating a current position state of the pointer in the user interface.

6. Method according to claim 5, characterized by displaying said copy of the graphical user interface in front of or besides the user interface.

7. Device for speech controlled navigation of a pointer in a graphical user interface, characterized by
means for generating a copy of the graphical user interface which provides discrete position states for the pointer;
means for generating a proxy pointer indicating current position states of the pointer in the graphical user interface;
means for displaying said copy together with said proxy pointer;
means for navigating said proxy pointer by speech commands with respect to said position states;
means for controlling said position states with respect to navigation of said proxy pointer.

8. Device according to claim 7, characterized by means for generating an operation event at the user interface with respect to a respective operation being effected by the proxy pointer.

9. Device according to claim 8, further characterized by means for immediately displaying an operational event at the user interface at the copy.

10. Device according to any one of claims 7 to 9, characterized by means for displaying a coordinate grid within said copy.

11. Device according to claim 10, further characterized by means for scaling said coordinate grid with respect to the size of the graphical user interface.

12. Device according to claim 10 or 11, further characterized by means for navigating the proxy pointer via intersections of said coordinate grid.
